# EUROPEAN PATENT APPLICATION

(11) **EP 4 219 116 A1**
(43) Date of publication of application: **02.08.2023**
(21) Application number: 22173499.9
(22) Date of filing: 16.05.2022
(51) Int. Cl.: B29C 44/24, B29C 48/21, B29C 59/04, B44C 5/04, E04F 15/02

(54) **METHOD FOR FORMING A MULTILAYER PVC SHEET MATERIAL WITH A FOAMED CARRIER**

(30) Priority: 31.01.2022 BE 202205064
(71) Applicant: Kreafin Group SA, 2530 Luxembourg (LU)
(72) Inventor: MICHEL, Yves, 3320 Meldert (BE)
(74) Representative: Chielens, Kristof

(57) **Abstract**

The present invention relates to a method for forming a multilayer plastic sheet material for floor and/or wall panels, wherein a first polymer mass comprising a chemically foamed PVC is melted under pressure and is forced through an extruder head at a well-defined discharge rate as a plastic strand in sheet form that is provided with one or more layers so that a multilayer plastic strand is formed, which is propelled towards two or more rolls of a rolling mill, which processes the multilayer plastic strand to a sheet of a defined thickness and where one of the rolls will apply a three-dimensional structure in the top layer. This sheet will then be led away by a discharge device to a sawing device to be cut off to the desired length and width and finally, in a subsequent production step, as multilayer plank-shaped elements, will be provided with coupling parts on two opposite edges so that several of said plank-shaped elements are couplable together.

## Description

The present invention relates on the one hand to a method for forming a multilayer plastic sheet material for floor and/or wall panels, wherein a first polymer mass comprising a PVC and a foaming agent is melted under pressure and is forced through an extruder head at a well-defined discharge rate in the form of a foamed plastic strand in sheet form that is provided with one or more layers so that a multilayer plastic strand is formed, which is propelled towards two or more rolls of a finishing stand that processes the multilayer plastic strand to a sheet of a certain thickness, which is then led away by a discharge device to a sawing device to be cut off to the desired length, wherein one of said rolls is a structuring roll which is provided for applying a well-defined structure to the surface of the sheet. After leaving the sawing device, in a subsequent production step the formed multilayer plank-shaped elements can be provided with coupling parts on two edges lying opposite each other so that several of said plank-shaped elements are couplable together. On the other hand, the present invention relates to a multilayer plastic sheet material.

The present invention relates in particular to a method that allows a multilayer PVC sheet material to be formed with a weight as low as possible owing to the application of PVC blowing agents and with maintenance of a three-dimensional structured top layer.

The sheet material that is manufactured by said method is in particular a plastic panel manufactured from PVC, which may be both a floor panel and a wall panel. The thickness of said panels is preferably between 2 and 10 mm, in particular between 3 and 8 mm. The panels that are manufactured as standard preferably have a width between 5 and 300 cm and a length between 10 and 500 cm. The known panels are manufactured by an extrusion process with a high level of mineral filler in the carrier material. The drawback of this technique is that the high weight of this sheet material, because of the high level of mineral filler and the associated density, gives rise to high transport costs, high CO₂ footprint and uncomfortable placement in the case of wall or floor applications. Now, the aim of the present invention is to provide a method that will make it possible to manufacture sheet material with a lower weight and lower density, with maintenance of the three-dimensional structured top layer.

The aim of the invention is achieved by means of a method for forming a multilayer plastic sheet material for floor and/or wall panels, as defined in the first claim. According to the patented method, a foamed polymer mass is produced in a first extruder, through the use of chemical blowing agents, and an unfoamed polymer mass is produced in a second coextruder and is melted on top of the first polymer mass from the first extruder in an extrusion die. This multipart plastic strand is then propelled at a well-defined discharge rate as a plastic strand in sheet form towards two or more rolls of a rolling mill, which processes the multilayer plastic strand to a sheet of a defined thickness. During this processing in this rolling mill, a further one or more layers are laminated with heat, and at least one roll (structuring roll) is provided with a three-dimensional structure, which owing to rolling in the laminated layers or in the sheet material at high temperature, will transfer this three-dimensional structure permanently in the visible top layer. Because the applied coextruded layer does not comprise any foaming agents, these also cannot be activated when these come into contact with a heated structuring roll. In this way, this coextruded layer forms a screening layer for the carrying layer that is formed from the foamed PVC material, in which foaming agents are present. The applied screening layer prevents the foaming agents present in the foamed PVC material being reactivated when the formed plastic strand comes into contact with the heated structuring roll.

In a first preferred embodiment of the method according tot he invention, the structure applied has a depth between 400 to 500 microns in the top layer of the formed sheet material. In a second preferred embodiment of the method, the structure applied has a depth between 50 to 400 microns in the top layer of the formed sheet material, in particular 200 to 400 microns in the top layer of the formed sheet material. In a third preferred embodiment of the method, the structure applied has a depth between 10 to 200 microns in the top layer of the formed sheet material.

In a particular embodiment of the method according to the invention a coextruded layer comprising the second polymer mass has a thickness between 200 and 600 microns. Alternatively, a coextruded layer comprising the second polymer mass has a thickness between 20 and 500 microns, in particular a thickness between 100 and 500 microns. In another particular embodiment of the method a coextruded layer comprising the second polymer mass has a thickness between 20 and 100 microns. Alternatively, a coextruded layer comprising the second polymer mass has a thickness greater than 600 microns. Alternatively, a coextruded layer comprising the second polymer mass has a thickness between 1 and 20 microns.

Other preferred embodiments of the method are described in the dependent claims.

Another object of the invention relates to a sheet material comprising a base sheet made of a foamed material on which an unfoamed coextrusion layer is applied provided with a decorative layer, wherein said sheet material is provided on its upper surface with a three-dimensional structure of at least 10 microns on average. In particular the structured top layer is provided with a UV varnish coat.

Other preferred embodiments of the sheet material are described in the dependent claims.

To explain the properties of the present invention and point out additional advantages and features thereof, there now follows a more detailed description of the method and of the sheet material according to the invention. It should be clear that nothing in the following description is to be interpreted as a limitation of the protection claimed in the claims.

This description is explained by means of the appended drawings, where:
- ***Fig. 1******:** is a schematic representation of a multilayer sheet material according to the invention;*
- ***Fig. 2. a)*** ***and*** ***2. b):*** *show schematically a part of the device on which the method according to the invention is applied;*
- ***Fig. 3******:** explains the application of a structure in the wearing layer;*
- ***Fig. 4******:** shows the discharge device via which the formed multilayer sheet material is led away to a sawing device;*
- ***Fig. 5******:** shows schematically the application of a bottom layer on the underside of the sheet material.*

The sheet material (1) according to the present invention is preferably a PVC sheet built up from several layers, which preferably will be applied as a waterproof, lownoise floor or wall covering.

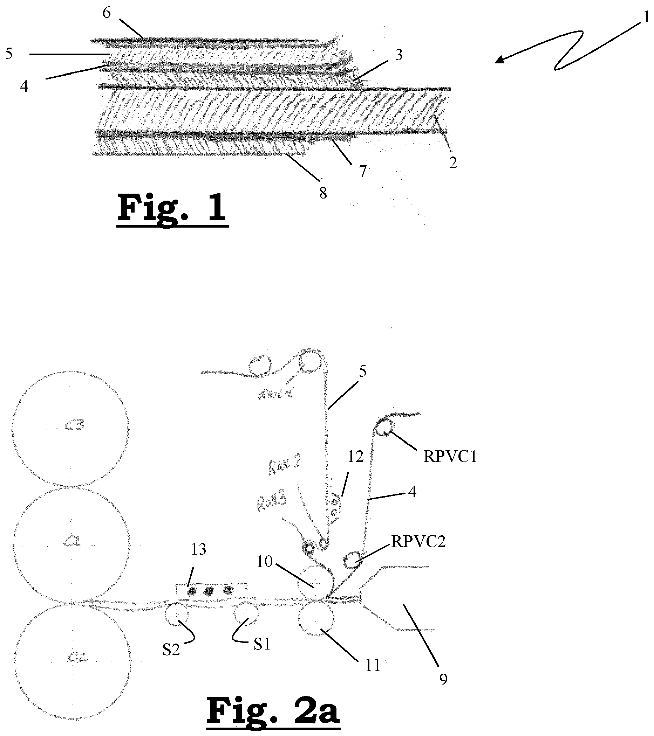

The sheet (1) is, as can be seen from Fig. 1, built up as follows:
1) UV varnish coat (6), preferably between 10 and 25 g/m²;
2) transparent three-dimensional structured top layer (5);
3) decorative layer (4) (film) of PVC (may optionally also be PP or PE);
4) unfoamed coextruded PVC layer (3);
5) extruded foamed PVC layer (2), which functions as carrier or base sheet;
6) layer of glue (7), preferably an EVA glue (other types of glue also come into consideration);
7) bottom layer (8), preferably of a foamed material.

Obviously sheet materials with some other structure likewise fall within the scope of protection of the present invention, for example such as a sheet material where no decorative layer (4) is present and the decorative finish is provided by printing on the transparent three-dimensional top layer (5) (preferably on the underside) or where the wearing layer is omitted for wall application and the decorative finish is applied by means of the decorative layer (4) or direct printing on the coextruded PVC layer (3). If applicable, the three-dimensional structure will be applied directly in the decorative layer (4) and/or the coextruded PVC layer (3) with a roll of the rolling mill before the optional application of the UV varnish coat (6).

The various layers from which the sheet is built up and the three-dimensional structure in the surface are produced / applied in a single production process. This structure may for example be a wood or stone structure. There follows hereunder a description of the method that contributes to maintaining the embossing structure in the top layer when using chemical foaming agents in the carrier sheet.

### Step 1: manufacture of the carrier sheet:

The basis or the core of the sheet (1) is the layer of foamed PVC (2) provided with a layer (3) of unfoamed PVC. Both layers are manufactured by means of a so-called multilayer T-die (9). Said die is connected to 2 separate extruders. The main extruder supplies the material for the foamed PVC layer (2) and a second extruder, the so-called coextruder, supplies the material for the unfoamed PVC layer (3). Both layers are distributed in the die over a sheet width with a well-defined thickness and density.

A foamed PVC, consisting of various components, is processed in the main extruder. Addition of a chemical foaming agent, for example such as: azodicarbonamide, azodicarboxamide, azodiformamide, azobisformamide, diazenedicarboxamide or sodium bicarbonate, provides, owing to a chemical reaction with the PVC resin, small air bubbles within the sheet, to reduce the specific gravity of the sheet. During the extrusion process, the additives are mixed and melted with the PVC resin, and this melt enters the die at a well-defined pressure and temperature. Because of the addition of the chemical blowing or foaming agent, small air bubbles will form in this melt at a certain temperature.

Then this foamed melt is spread by the "hat-rack" principle over the full width of the die and with a well-defined thickness.

The action of the coextruder is similar, the material used in the coextruder is a flexible PVC or a rigid PVC. In this extruder, however, no blowing agents are used when adding the components to the PVC resin.

It is important that the coextrusion top layer of the sheet is provided with a layer without the presence of blowing agents for the next step 2) to be carried out successfully.

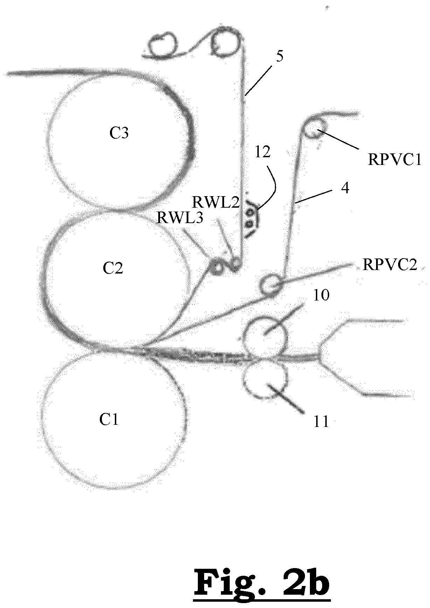

### Step 2, pre thickness calibration of sheet + pre-lamination of decorative (film) layer and wearing layer (see Fig. 2)

Once the melt leaves the die (9), this melt is received by the rolls of the rolling mill (C1,C2,C3,10,11). A specific feature of these rolls is that they must be kept at a well-defined temperature so that the hot melt leaving the die (9) does not cool immediately owing to an excessive temperature difference between the rolls and the hot melt.

The function of the rolling mill is as follows:
a) a first precalibration in thickness of the melt leaving the T-die (9), together with the applied decorative finish (4) and wearing layer (5).
b) light pressing of the decorative layer onto the hot sheet. The decorative layer is preferably a PVC film layer with a thickness preferably between 50 and 150 microns, in particular between 70 and 100 microns. This PVC film comes from a roll produced beforehand. The unwinding of the film takes place over a number of rolls, the roll RPVC 1 is a roll that constantly measures the tension on the decorative layer (PVC film) (4) and ensures that the applied forces that are necessary for unrolling the PVC film are always the same, regardless of the diameter of the roll of PVC film or the thickness of the film. The roll RPVC 2 is positioned at a well-defined angle. The purpose of this roll is to bring the film under the wearing layer (5) and between the rolls (10 and 11) or between the rolls (C1 and C2), in such a way that there is no inclusion of air between the PVC film (4) and on the one hand the wearing layer (5) and the multilayer extruded PVC sheet (2) and (3). Temperature, stresses, angle and distance are very important for obtaining a stable process. Of course, the whole unwinding unit is provided with continuous web tensioning and web guidance.
c) Applying the wearing layer (5) on the 3 layers already present, i.e. the decorative film layer (4), the unfoamed coextrusion layer (3) and foamed carrier (2). Also the wearing layer (5) is unwound by a complete unwinding unit provided with web tensioning and web guidance. However, a number of points must also be taken into account.
   1) Depending on the thickness of the wearing layer (5), it is possible for these to be warmed up prior to lamination on the decorative layer by means of for example IR radiators (12), in order to make everything a bit more flexible but also to limit the thermal shock when they are laminated on one another; the melt leaving the die (9) has a temperature of about 150°, the decorative film (4) is so thin that it assumes this temperature immediately, but the wearing layer (5) has thicknesses from 0.1 to 1.0 mm and so must in certain cases be warmed up somewhat. This is done by the IR radiators (12).
   2) After the preheating, this film travels over a roll stand RWL2 and RWL3, and once again angles, distances and stresses are important. The aim is that the preheated wearing layer is transported almost tensionless between the rolls (10) and (11) or between the rolls (C1) and (C2) of the rolling mill; what is important here is the contact surface or the angle at which the wearing layer comes into contact with the respective roll.
d) Finally, the rolls of the rolling mill laminate the melt leaving the die (9) with the printed PVC decorative film (4) and the transparent wearing layer (6). It is very important that the decorative film and wearing layer are thus unwound with a certain tension, just sufficient for everything to be fused together without inclusion of air and without stretching of the film and wearing layer. On the other hand it is also important that the melt leaving the die is brought stress-free into the rolling mill. Moreover, it is extremely important that the rolls (10) and (11) have a speed that can be set separately and accurately. The latter are synchronized with the speed of rolls C1, C2 and C3 with the possibility of setting a defined delta between the two speeds to avoid build-up of stresses. In its turn, the extrusion speed, with the associated discharge rate of the melt from the T-die, is synchronized with the rolls (10) and (11) also taking into account a possible delta for these speeds, once again to avoid the possible build-up of stresses.

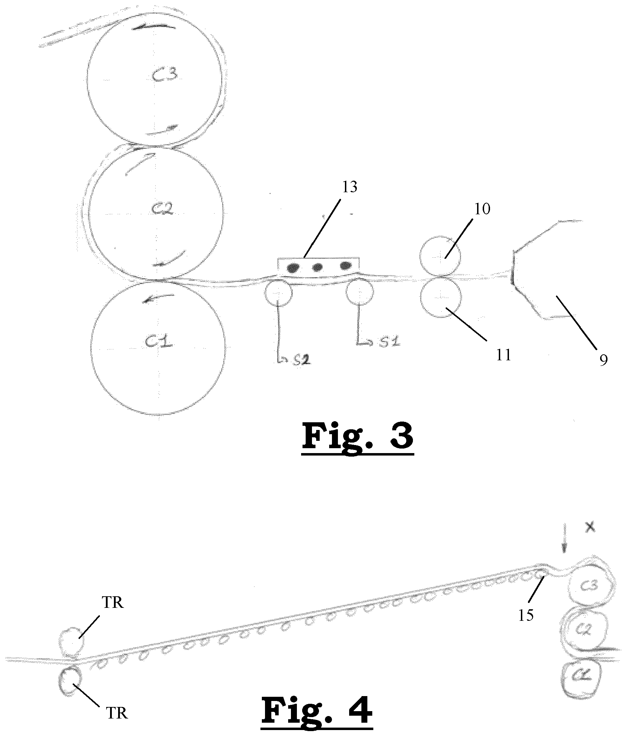

### Step 3: final calibration of the thickness and introduction of a structured surface (embossing) (see Fig. 3)

Once the aforementioned layers have been laminated to each other, they still have to be provided with a certain three-dimensional embossing structure. This must all be done at well-defined temperatures and of course with minimal stresses. For this embossing structure to be applied permanently and deep enough in the top layer, sufficient heat is necessary when contact is made by the structured roll (C2) with the top layer of the sheet (1). This build-up of a high enough temperature to obtain good, deep embossing may take place in various ways, for example such as:
1) Warm and soften the top layer of the sheet (1) so that finally a deep surface structure (embossing) can be pressed in with the roll C2. The wearing layer (5) is thus softened by means of an IR radiator (13) just before the sheet with the wearing layer comes into contact with the structuring roll (embossing roll) (C2).
2) Another way of producing the embossing structure deep enough in the sheet (1) is by raising the temperature on the structuring roll (C2) itself to a very high temperature.

It is thus clear that in each case the top layer must be warmed up additionally in order to be able to apply a sufficiently deep embossing in the visible top layer. The disadvantage, when as described in step 1) blowing agents are present in the carrier sheet, is that these blowing agents, on raising the temperature again to apply an embossing structure, will produce a foaming effect again in this carrier sheet (2). This new, additional foaming effect in this carrier sheet has adverse consequences for the stability of the process and the finished product. If the wearing layer is warmed up by IR lamps (13), as shown schematically in Fig. 2a), there will be additional sag of the sheet and stresses will build up in the rolling mill on reactivation of the blowing agents in the carrier sheet (2) at the level of the rolling mill. These additional built-up stresses will have an adverse effect on the thermal stability of the finished product. If the transparent wearing layer is heated to the level of the structuring roll (C2), as shown schematically in Fig. 2b), after the sheet leaves the structuring roll (C2) there will be uncontrolled further increase in its thickness until the temperature of the sheet is again low enough to stop the foaming process. Moreover, the desired effect of three-dimensional structuring (such as stone or wood grain imitation) in the finished product will be partially undone through the swelling of the basis sheet because of reactivation of the foaming process in the carrier sheet. Thus, to prevent reactivation of the blowing agents in the carrier sheet (2) at the level of the IR heating elements (13) or at the level of the structuring roll (C2) of the rolling mill or on leaving this rolling mill, it is important to be able to incorporate a coextruded intermediate layer (3) without blowing agents between the carrier sheet (2) and the decorative film (4) with a transparent wearing layer (5) as top layer. This coextruded intermediate layer without blowing agents will ensure that the necessary warming up for the embossing on the top layer does not give rise to a new foaming effect in the carrier sheet.

Furthermore, it thus also appears empirically that the thickness of the coextruded layer is best kept in proportion to the desired embossing depth on the finished product. Thus, at an average desired embossing depth of for example 400 to 500 microns in the top layer of the finished product, depending on the thermal deformability of the top layer and the associated necessary build-up of temperature, the thickness of the coextrusion layer will preferably be between 200 and 600 microns. This coextrusion layer will be arranged so that reactivation of the blowing agents in the carrier sheet will be reduced significantly or even avoided. At a more preferred average embossing depth between 200 and 400 microns, the coextrusion layer is preferably also between 100 and 500 microns. For an average embossing depth of for example 10 to 200 microns, the thickness of the coextrusion layer is then preferably between 20 and the 300 microns to avoid reactivation of the blowing agents in the basis sheet. The settings of the process variables may, however, also be a determining factor for dealing with other ratios of the desired embossing depth to the coextrusion thickness to avoid reactivation of the foaming agents in the basis sheet.

The depth of the structure in the structuring roll is normally somewhat deeper than the depth of the structure in the final sheet.

### Step 4, stress-free cooling of the sheet on a long roller table at a well-defined angle (see Fig. 4)

This process has already been described in an earlier patent publication of the patent holder. Here, the sheet will be cooled on a long roller table that is installed at an angle. At the end of this roller table there are 2 driven pinch rolls (TR), which ensure that the sheet is propelled at a well-defined linear speed. Here, the sheet will sag between roll C3 and the first roller (15) of the roller table. The sag value or factor is measured by measuring sensors. The values of these measurements are converted and control the peripheral speed of the pinch rolls (TR) via a PID control system. In this way, the value of the sag of the sheet (factor X) will always be kept constant and we can ensure that the sheet cools stress-free. Once the sheet reaches the level of the pinch rolls, it has cooled down to the extent that it is in the solid state and so is no longer susceptible to certain mechanical stresses that may be introduced in a further course of the process (saw off edge strips, glue sound-absorbing bottom layer, saw off to length).

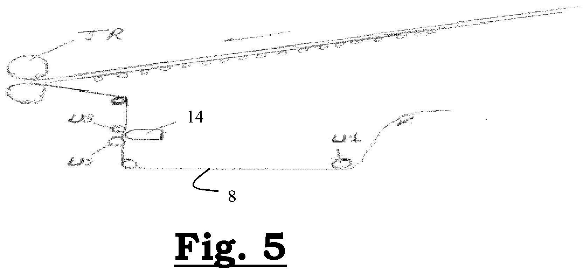

### Step 5, gluing the bottom layer (see Fig. 5)

The bottom layer (8) is preferably a PS (polystyrene) or PE (polyethylene) foam layer that is glued to the underside of the sheet (1) by means of a gluing device (14). The purpose of this bottom layer is generally known in the applications of floating floor covering.

The bottom layer comes from a roll, and with constant web guidance and constant web tensioning measured by roll U1 the layer (8) will be glued at the bottom of our sheet.

Up to now, we have thus practically completed all steps of the production process. After gluing, the sheet is trimmed to width, the edge strips are removed on the left and right by means of circular saws, cutting or chopping devices so that we finally get a constant width of the sheet. After removal of the edge strips, the sheet will be brought to the desired length, preferably by means of a sawing, cutting or chopping device.

Once the sheet has been brought to the desired length, it goes through a brushing system to remove all material from sawing, and in a final step the sheets are provided with a UV varnish coat (6). This varnish coat provides on the one hand a matt finish, and on the other hand this varnish coat is an extra protection against soiling of the floor.

The varnish coat is applied by means of conventional rotary application systems, and after application of the varnish it is cured by means of UV lamps.

### Step 6, the sheets are sawn to planks and provided with coupling parts:

In the next operation the sheets are sawn to the desired width and length and these planks are provided with coupling parts on two opposite edges so that several of said plank-shaped elements are couplable together.

## Claims

1. Method for forming a multilayer plastic sheet material (1) for floor and/or wall panels, wherein a first polymer mass comprising a PVC and a foaming agent is melted under pressure and is forced through an extruder head at a well-defined discharge rate in the form of a foamed plastic strand in sheet form that is provided with one or more layers so that a multilayer plastic strand is formed that is propelled towards two or more rolls of a finishing stand that processes the multilayer plastic strand to a sheet of a certain thickness, which is then led away by a discharge device to a sawing device to be cut off to the desired length, wherein one of said rolls is a structuring roll that is provided for applying a well-defined structure to the surface of the sheet, **characterized in that** a second polymer mass comprising a PVC without foaming agent is melted under pressure and is coextruded on the first polymer mass, both are then forced through the extruder head in the form of a multilayer plastic strand in sheet form, the top layer of which is formed by the second polymer mass.

2. Method according to Claim 1, **characterized in that** the first and the second polymer mass comprises a rigid PVC.

3. Method according to Claim 1 or 2, **characterized in that** the thickness of the multilayer plastic sheet material (1) is between 2 and 10 mm, preferably between 3 and 8 mm.

4. Method according to one of the preceding claims, **characterized in that** a decorative layer (4) made of PVC is applied on the top layer.

5. Method according to Claim 4, **characterized in that** a wearing layer (5) with a thickness between 0.1 and 1 mm is applied on the decorative layer (4).

6. Method according to Claim 1, **characterized in that** a transparent wearing layer (5) made of PVC with a thickness between 0.1 and 1 mm, which is provided with a print, is applied on the top layer.

7. Method according to one of the preceding claims, **characterized in that** the structure applied has a depth between 50 to 400 microns in the top layer of the formed sheet material.

8. Method according to one of the preceding claims, **characterized in that** a coextruded layer comprising the second polymer mass has a thickness between 20 and 500 microns.

9. Method according to one of the preceding claims, **characterized in that** the structure is applied in a transparent top layer.

10. Method according to one of the preceding claims, **characterized in that** the sheet material is sawn to plank-shaped elements in the sawing device, wherein the plank-shaped elements are provided with coupling parts on two opposite edges so that several of said plank-shaped elements are couplable together.

11. Sheet material (1) comprising a base sheet (2) made of a foamed material on which an unfoamed coextrusion layer (3) is applied provided with a decorative layer (4), **characterized in that** said sheet material is provided on its upper surface with a three-dimensional structure of at least 10 microns on average.

12. Sheet material according to Claim 11, **characterized in that** the decorative layer (4) is a printed plastic film, in particular a PVC film.

13. Sheet material according to one of Claims 11 or 12, **characterized in that** a transparent top layer is applied on top of the decorative layer (4), wherein said structure is applied in the transparent top layer, and wherein the transparent top layer is made of PVC.

14. Sheet material according to one of Claims 11 to 13, **characterized in that** the structured top layer is provided with a UV varnish coat (6).

15. Sheet material according to one of Claims 11 to 14, **characterized in that** a bottom layer is glued to the underside of the sheet.

16. Sheet material according to one of Claims 11 to 15, **characterized in that** the sheet material is an extruded sheet material that is sawn into planks and/or is provided with coupling means on two opposite edges.
